# EUROPEAN PATENT SPECIFICATION

(11) **EP 3 147 752 B1**
(45) Date of publication and mention of the grant of the patent: **26.12.2018**
(21) Application number: 15186904.7
(22) Date of filing: 25.09.2015
(51) Int. Cl.: G06F 3/01, G06F 3/041, G06F 3/048, B25J 13/02, B25J 19/06, B25J 13/08

(54) **AN ARRANGEMENT FOR PROVIDING A USER INTERFACE**
ANORDNUNG ZUR BEREITSTELLUNG EINER BENUTZERSCHNITTSTELLE
AGENCEMENT POUR FOURNIR UNE INTERFACE UTILISATEUR

(43) Date of publication of application: 29.03.2017
(73) Proprietor: Technische Universität München, 80333 München (DE)
(72) Inventor: Mittendorfer, Philipp, 82327 Tutzing (DE)
(74) Representative: Lucke, Andreas

(56) References cited:
- EP-A1- 2 677 291
- US-A1- 2005 187 657
- MITTENDORFER P ET AL: "Humanoid Multimodal Tactile-Sensing Modules", IEEE TRANSACTIONS ON ROBOTICS, IEEE SERVICE CENTER, PISCATAWAY, NJ, US, vol. 27, no. 3, 1 June 2011 (2011-06-01), pages 401-410, XP011382845, ISSN: 1552-3098, DOI: 10.1109/TRO.2011.2106330
- Philipp Mittendorfer ET AL: "Uniform Cellular Design of Artificial Robotic Skin", Proceedings of ROBOTIK 2012; 7th German Conference on Robotics, 21 May 2012 (2012-05-21), pages 145-149, XP055255208, Munich, Germany ISBN: 978-3-8007-3418-4 Retrieved from the Internet: URL:http://ieeexplore.ieee.org/ielx5/63094 70/6309471/06309497.pdf?tp=&arnumber=63094 97&isnumber=6309471 [retrieved on 2016-03-04]
- Sarah Lichtenberger: "Lego Mindstorms EV3 Tutorial- Measuring and Displaying Distance", , 10 December 2013 (2013-12-10), XP054976406, Retrieved from the Internet: URL:https://www.youtube.com/watch?v=r3L4Gm H78P4 [retrieved on 2016-03-04]
- MITTENDORFER PHILIPP ET AL: "3D spatial self-organization of a modular artificial skin", 2014 IEEE/RSJ INTERNATIONAL CONFERENCE ON INTELLIGENT ROBOTS AND SYSTEMS, IEEE, 14 September 2014 (2014-09-14), pages 3969-3974, XP032676942, DOI: 10.1109/IROS.2014.6943120 [retrieved on 2014-10-31]
- CHUAN WANG ET AL: "User-interactive electronic skin for instantaneous pressure visualization", NATURE MATERIALS, vol. 12, no. 10, 21 July 2013 (2013-07-21) , pages 899-904, XP055124849, ISSN: 1476-1122, DOI: 10.1038/nmat3711

## Description

### FIELD OF THE INVENTION

The present invention is in the field of user interfaces between a human and a machine, in particular in the field of collaborative robotics wherein a machine operates in an industrial environment in the vicinity of a human, and wherein the human and the machine collaborate by communicating via the user interface. In this respect, the present invention comprises an arrangement for providing a user interface of an apparatus.

### BACKGROUND OF THE INVENTION

The collaboration of humans and machines, in particular in the field of collaborative robotics, can require a human to be present in the operational range of a machine so as to allow efficient collaboration. For this purpose, a user interface is provided to enable communication between the human and the machine, for example to convey commands from the user to the machine, and to provide the user with information related to the current status and/or operation of the machine.

However, as the human may be present in the operational range of the machine, the movements of the machine can induce hazardous situations for the human, in particular when a rigid machine or machine part undesirably collides with the human body. In fact, such situations can result in severe injuries, which may even be fatal for the human.

In order to avoid such hazards for the human, the human should be aware of the current operational state and the future intentions of the machine. By informing the human about a potential or planned dynamic movement of respective machine parts, the human can use this information to avoid potential collisions, for example by stepping aside or by standing still, depending on the situation.

However, the human may lack the technical skill to reliably interpret technical information and to predict the future behavior of the machine, and may thus require clear indications to understand the intentions of the machine, for example an information clearly indicating which part/s of the machine is/are subject to movement, and the intended speed, orientation and position profiles of such movement of parts.

In other words, an efficient collaboration of humans and machines generally requires a user interface to allow communication between the human and the machine. Such an interface may, for example, be used by the user to convey commands or requests to the machine, and to provide the user with information related to the current status and/or operation of the machine. Moreover, the collaboration of humans and machines can require the human to be present in the operational range of the machine, wherein the movements of the machine can induce hazardous situations for the human. Thus, in order to improve safety and efficiency of such collaboration, it is important to provide a suitable user interface.

The safety of collaboration between a human and a machine is conventionally improved by isolating the machine from the human, for example by caging or fencing the machine to define its operational area which may not to be entered by the human. However, area restricting safety measures limit the scope of possible interactions between the human and the machine, and are thus undesirable.

Alternatively, conventional machines can provide acoustic and/or light emitting warning signals, for example by using a siren and/or beacon lights for warning the user of the current or intended operational activities and/or movements of the machine. However, although such signaling may alert the user about imminent or pending operation activities, acoustic signaling is generally not effective in noisy industrial environments, and the effectiveness of beacon lights depends on the relative position and orientation of the user and the machine, in particular when the user is positioned close to the machine. Moreover, such conventional warning signals are generally not suited for indicating positional and directional information describing the respective machine movement, for example for indicating the direction or speed of an intended machine part movement. Thus, such conventional warning signals provide limited information for the user, which may be insufficient to ensure safety, in particular if the user is present in the operational range of the machine.

Alternatively, displays, keyboards, buttons and touch panels are conventionally arranged on the surface of the machine so as to provide the user with an interface to receive information from the machine, or to convey commands or programming instructions to the machine. Such an arrangement generally represents a separate interface unit positioned at a specific location on the outer surface of the machine. Thus, in order to interact with the machine, the user is required to position himself accordingly, preferably by facing the respective surface of the machine holding the interface unit, generally close to the interface unit. This may require the user to distance himself from an object being processed in the collaborative user-machine environment. In other words, the user may be required to change his field of vision so as to operate the interface unit, which may result in loss of sight of the object being processed and may thus impede the direct physical collaboration of the human and the machine.

The document "Humanoid Multimodal Tactile-Sensing Modules" by Mittendorfer P., et. al., IEEE Transactions on Robotics, NJ, US, vol. 27, no. 3, 1 June 2011 (2011-06-01), pages 401-410, XP011382845 discloses a HEX-O-SKIN arrangement of active tactile modules forming a network of small skin modules on a robot arm, with local preprocessing and multiple sensor modalities. The skin elements are arranged on a robot arm, and can be touched by a user for guiding or interacting with the robot. Five LEDs on each module provide visual feedback; and a 3-D reconstruction of the robot arm is generated from simulated orientation data based on information collected from the modules. Similarly, the document "Uniform Cellular Design of Artificial Robotic Skin" by Philipp Mittendorfer, et. al., Proceedings of ROBOTIK 2012; 7th German Conference on Robotics, 21 May 2012, pages 145-149, XP055255208, Munich, Germany, relates to a uniform cellular design of an artificial robotic skin consisting of a HEX-o-SKIN comprising tactile modules. EP2677291A1 describes a capacitive force sensor which can be included in skin layer elements; and the YouTube video "Lego Mindstorms EV3 Tutorial- Measuring and Displaying Distance" by Sarah Lichtenberger: 10 December 2013 (2013-12-10), XP054976406, shows a simple LCD display being arranged on a vehicle robot to display the distance to an obstacle.

The document "3D Spatial Self-organization of a Modular Artificial Skin by" Mittendorfer et. al., 2014 IEEE/RSJ International Conference on Intelligent Robots and Systems (IROS 2014), September 14-18, 2014, Chicago, IL, USA, pages 3969-3974 is an earlier publication of the present inventor and describes spatially self-organizing of a modular artificial skin in 3D space. For this purpose, the document suggests combining a 3D surface reconstruction algorithm for individual patches of artificial skin with a common active visual marker approach. LEDs built into every element of the modular artificial skin are used to turn each reconstructed patch of skin into an active 6DoF visual marker. Using a calibrated camera, it is then possible to estimate the homogeneous transformation between multiple, at least partially visible skin patches, e.g. when distributed on the body of a robot.

The document "User-interactive electronic skin for instantaneous pressure visualization" by Chuang Wang et. al, Nature Materials, Vol, 12, October 2013, pages 899-904 discloses an electronic skin for instantaneous pressure visualization, comprising an array of OLEDs. A part of the OLEDs is switched on using a pressure sensitive rubber part, such that a respective OLED will illuminate light in response to received pressure.

### SUMMARY OF THE INVENTION

Accordingly, a problem underlying the invention is to provide a user interface of an apparatus to improve the interaction between a user and a machine, wherein the content of information and interaction options provided by the interface can be provided with improved comfort, usability and safety to the user, in particular in the field of collaborative robotics where the human is present in the operational range of the robot. In this respect, the apparatus may correspond to the machine, or to a part of the machine, wherein the machine can for example correspond to a robot or a robot arm.

This problem is solved by an arrangement for providing a user interface of an apparatus, in particular a robot, according to claim 1. Preferable embodiments are defined in the dependent claims.

More specifically, the arrangement for providing a user interface of an apparatus comprises a plurality of interaction elements arranged on a surface of the apparatus. Each of the interaction elements comprises at least one detection element for detecting at least one physical parameter related to the apparatus or to a user input. In other words, each of the detection elements can detect a physical parameter related to the apparatus or to a user input. For example, each of the detection elements may comprise a capacitive sensor, a force sensor, a pressure sensor, a position sensor, a humidity sensor, a temperature sensor, a reflectivity sensor, an acceleration sensor, a rotation sensor, and/or multi-modal sensors, to name a few examples. Thus, the detection elements may be adapted to detect a user input provided by a user touching or otherwise influencing the surface of the apparatus, in particular wherein the apparatus is a robot configured to be operated by the user in a collaborative robotic environment, and preferably wherein the user is present in the operational range of the robot. In this way, the user can interact directly with the surface of the robot within the operational range of the robot, which enhances the possibilities of user-machine contact, communication and collaboration.

Furthermore, each of the interaction elements further comprises at least one indication element for indicating information. In this regard, the indication elements correspond to any technical solution for indicating information to a user or a machine. In particular, each of the indication elements may comprise a display element, such as for example a light-emitting element or a liquid crystal display element. In addition or alternatively, each of the indication elements may comprise an actuator element for providing a tactile feedback to a user touching the respective interaction element. In this way, the user can receive tactile feedback information from the actuator element without being required to direct his field of vision to a surface of the apparatus. In any case, the plurality of indication elements may be adjacently arranged on the surface of the apparatus such as to form an array or a mesh structure, wherein the array or the mesh structure at least partly covers the surface of the apparatus, preferably by more than 30%, and more preferably by more than 50%. Increasing the proportional surface of the array or the mesh structure improves the chances of being able to convey information to a user or a machine located in the vicinity of the apparatus.

The arrangement further comprises a control unit coupled to the plurality of interaction elements and adapted to activate a plurality of said indication elements, such as to indicate information to a user or a machine. The indicated information comprises a graphical user interface, and/or comprises an intended movement and/or speed of the apparatus or of a mechanical part thereof. Preferably, the control unit is adapted to activate said plurality of indication elements such as to conjunctly indicate said information, wherein the indicated information preferably represents an image and/or a two dimensional pattern on the apparatus surface. In this respect, as discussed in detail below, the image or the two dimensional pattern may, for example, represent a frame of an animation and/or a movie clip.

In an embodiment of the arrangement, the respective image and/or the two dimensional pattern indicates the past, the current and/or the intended direction of movement and/or speed of the apparatus or of a mechanical part thereof, wherein said image and/or two dimensional pattern preferably comprises a graphical user interface, preferably a graphical user interface menu or a graphical user interface form comprising selectable and/or adjustable control elements.. In this way, a user or a machine can be informed about the past, the current and/or the intended state or movement of the apparatus or of a mechanical part thereof, which may be particularly suitable for providing an alert to the user such as to prevent or to avoid human-machine collisions. For this purpose, the control unit may be adapted to determine the past, the current and/or the intended direction of movement and/or speed of said apparatus or of a mechanical part thereof based on the detected physical parameters of the apparatus or based on measurements provided by further sensors, such as for example by camera vision equipment positioned in the vicinity of the apparatus.

For example, the control unit may be adapted to determine the past, the current and/or the intended direction of movement and/or speed of said apparatus or of a mechanical part thereof by determining the current position and orientation of at least one mechanical part of the apparatus based on detected physical parameters of the apparatus. This may be particularly useful when the control unit is adapted to select said plurality of indication elements based at least in part on the position and orientation of at least one mechanical part of the apparatus. As explained in detail below, such a feature allows to determine which of the indication elements should be selected to correspond to a respective pixel of, for example, patterns or images. Thus, the indication elements may, for example, be selected such as to position and rotate an image on a robot's surface, wherein the positioning and rotation preferably compensate a movement or rotation of the robot or of a part thereof. In this respect, the control unit may be adapted to dynamically select said plurality of indication elements based on the current position and orientation of at least one mechanical part of the apparatus continuously determined during a movement of the at least one mechanical part of the apparatus, such as to continuously compensate the movement, during the movement of the at least one mechanical part of the apparatus.

Moreover, the control unit may be adapted to select the information indicated by the indication elements depending on the context of user interaction with the apparatus. In particular, the information may be selected depending on the current state of collaboration or apparatus operation and/or depending on a user input detected by the detection elements. In this way, useful or necessary information can be provided to the user, whereas the indication of redundant information, neither corresponding to the current state of collaboration or apparatus operation, nor to the intentions indicated by a user input, can be avoided to prevent confusion and/or to enhance the safety and usability of the user interface.

For example, the control unit may be adapted to determine whether a user input detected by the detection elements indicates that a movement of the apparatus should be halted, that a movement of the apparatus should be guided by the user input, or that the behavior of the apparatus should be programmed by the user input, in particular wherein the determination includes detecting user inputs at different detection elements over a period of time. In this way, the user may apply a sequence of inputs or gestures such as to indicate a specific command or request, for example, the user can stroke along the interface surface to indicate the desired speed and/or direction of a machine part movement.

### SHORT DESCRIPTION OF THE FIGURES

- Fig. 1: shows a robotic arm comprising an arrangement including a plurality of interaction elements for providing a user interface,
- Fig. 2: provides a schematic diagram of one of the interaction elements shown in Fig. 1,
- Fig. 3: provides a schematic diagram of a central control unit and a distributed control unit,
- Fig. 4: shows the indication of information related to physical parameters,
- Fig. 5.: shows a two dimensional image being indicated by using a plurality of indication elements, and
- Fig. 6: shows a sequence of frames of an animated indication of information on the robot arm.

### DESCRIPTION OF PREFERRED EMBODIMENTS

For the purposes of promoting an understanding of the principles of the invention, reference will now be made to the examples illustrated in the drawings and specific language will be used to describe the same. It will nevertheless be understood that no limitation of the scope of the invention is thereby intended, such alterations and further modifications in the illustrated devices and method and such further applications of the principles of the invention as illustrated therein being contemplated therein as would normally occur now or in the future to one skilled in the art to which the invention relates.

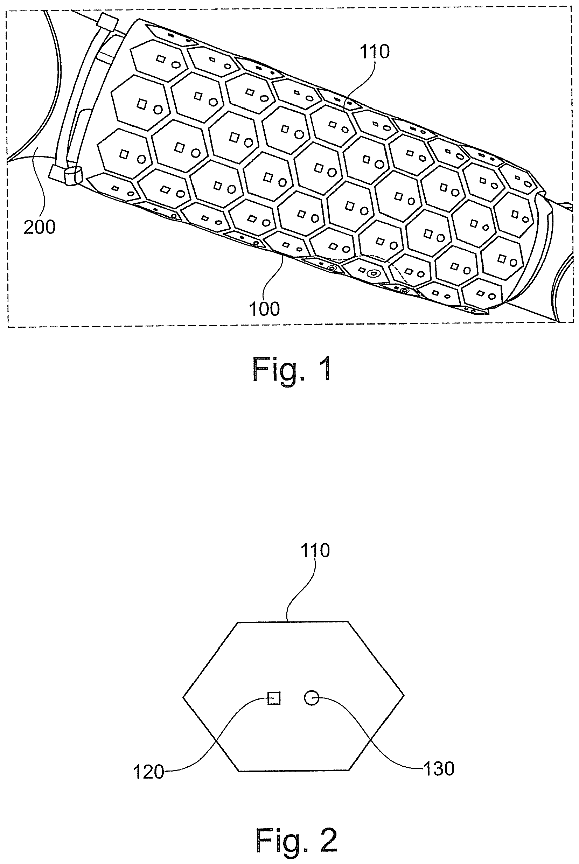

Fig. 1 shows an example of an arrangement 100. In this example, the apparatus 200 corresponds to a robotic arm, but as mentioned above, other examples can include other types of machines or machine parts, such as for example parts of production machines used in industrial environments.

As shown in Fig. 1, the arrangement 100 includes a plurality of interaction elements 110 which are arranged on the surface of the robot arm 200. In this example, the interaction elements 110 are formed as hexagonal cells such as to allow a dense arrangement of the interaction elements 110 at least partly covering a surface of the robot arm 200, or even completely covering a surface of the robot arm 200 for enhanced granularity. In other words, the plurality of interaction elements 110 may be adjacently arranged such as to form an array or a mesh structure, wherein the array or the mesh structure at least partly covers the surface of the robot arm 200, preferably more than 30%, most preferably more than 50% of the surface of the robot arm 200 and/or a tool.

Fig. 2 shows one of the respective interaction elements 110 comprising a detection element 120 for detecting at least one physical parameter related to the apparatus or to a user input. In this example, the detection element 120 is shown to cover only a small area of the interaction element 110. Alternatively, the detection element 120 may cover larger areas of the interaction element 110, or may cover the complete area of the interaction element 110 for enhanced detection capabilities. Alternatively, more than one detection element 120 may be comprised by each interaction element 110 and/or different detection elements 120 may be comprised by different interaction elements 110. The detection element 120 may comprise a sensor for detecting a physical contact, such as for example a user touch, a distance to an object facing the detection element 120, a vibration or a mechanical stress, position, acceleration or speed, to name a few examples. Alternatively, more than one sensor may be comprised by each detection element 120 and/or different sensors may be comprised by different detection elements 120. For example, the detection element 120 may be adapted to detect a user input provided by a user touching or otherwise influencing the surface of the apparatus, for example by force, pressure or electrical charge detection, in particular wherein the apparatus is a robot operated by the user in a collaborative robotic environment, and further preferred wherein the user is present in the operational range of the robot. In this respect, the detection element 120 may comprise a capacitive sensor, a force sensor, a pressure sensor, a position sensor, a humidity sensor, a temperature sensor, a reflectivity sensor, an acceleration sensor, a rotation sensor, and/or multi-modal sensors for providing detected physical parameters of the apparatus or of a user input to the control unit. For example, the document EP12172602A relates to a corresponding capacitive force sensor or touch sensor which can be employed in robotics for providing human-machine interfaces.

Fig. 2 further shows that the interaction element 110 further comprises an indication element 130 for indicating information, such as for example a display element, in particular a light-emitting element (LED, OLED) or a liquid crystal display (LCD) element, and/or an actuator element for providing a tactile feedback to a user touching the respective interaction element, in particular a force-feedback element. The indication element 130 shown in Fig. 2 covers only a small area of the interaction element 110, but may in other examples cover larger areas of the interaction element 110, or may even cover the complete area of the interaction element 110 such as to enhance the indication effect achievable by the indication element 130. Alternatively, more than one indication element 130 may be comprised by each interaction element 110 and/or different indication elements 130 may be comprised by different interaction elements 110.

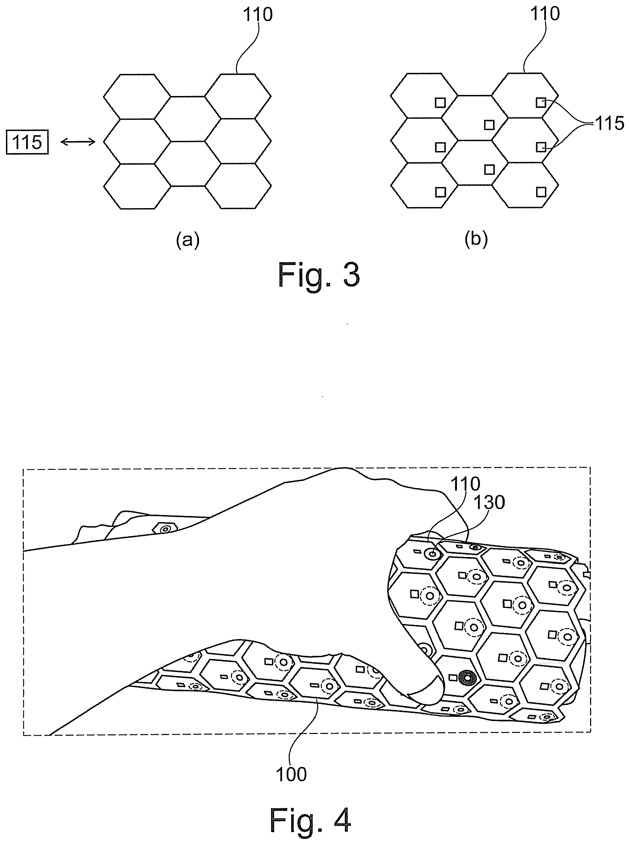

The arrangement further comprises a control unit 115 (not shown in Figs. 1 and 2) coupled to the plurality of interaction elements 110. The control unit 115 may represent a central control unit 115 that is coupled to each of the interaction elements 110, for example by a wired or a wireless connection as illustrated in Fig. 3a, or a distributed control unit 115, for example a control unit which is comprised in an interconnected manner by a plurality of the interaction elements 110 as illustrated in Fig. 3b. In either case, the control unit 115 is coupled to and adapted to activate the indication elements 130 of a plurality of the interaction elements 110. Thus, in accordance with the present invention, the control unit 115 is adapted to activate a plurality of indication elements 130 to indicate information selected by the control unit 115. In particular, the control unit 115 activates a plurality of indication elements 130 such as to indicate information comprising a graphical user interface, and/or comprising an intended movement and/or speed of the apparatus or of a mechanical part thereof. Thus, the indicated information may for example be related to the physical parameters detected by the detection elements 120 such as to indicate an intended movement of the robot or of a mechanical part thereof. In other examples, the indicated information may comprise a graphical user interface allowing the user and the machine to communicate during collaborative operations. These aspects of information content are described in more detail below.

In an example, the control 115 unit may select the information indicated by the indication elements 130 depending on the context of a user interaction with the apparatus, in particular depending on the current state of apparatus operation and/or depending on a user input detected by the detection elements 120. For example, the control unit 115 may be adapted to determine whether a user input detected by the detection elements 120 indicates that a movement of the apparatus should be halted, that a movement of the apparatus should be guided by the user input, or that the behavior of the apparatus should be programmed by the user input. Then, depending on the result, the control unit 115 may activate the plurality of indication elements 130 such as to indicate that the apparatus is being halted, that the apparatus is ready to be guided by a user input, for example by having the user manipulate the apparatus by applying a physical force to illuminated zones indicated by the plurality of indication elements 130, or to indicate that the user interface can be used for programming the apparatus, respectively. In a further example, the control unit 115 may determine the meaning of a user input by detecting user inputs at different detection elements 120 over a period of time. In this way, the user can apply a sequence of inputs or gestures such as to indicate a specific command or request, for example, the user can stroke along the interface surface to indicate the desired speed and/or direction of a machine part movement. Moreover, in further examples, the control unit 115 may use physical parameters detected by the detection elements 120 such as to determine if a detected signal corresponds to a user input. For example, if a humidity sensor and/or a temperature sensor detects a humidity or temperature indicating the presence of a human body, the control unit 115 can assume that a detected force or pressure signal corresponds to a user input.

The indicated information may include a graphical user interface (GUI) providing menus or forms including selectable and/or adjustable control elements, such as for example selectable buttons, slider bars, objects, tabs etc. Moreover, additional indicated information may include advertisement or messages not related to physical parameters of the respective apparatus, for example a welcome message, or an indication of directions to help identifying safety zones for a user.

Fig. 4 illustrates how an indication element 130 of an interaction element 110 is activated/illuminated by the control unit 115 if the user applies a pressure to the respective interaction element 110. In this example, the information provided by the activated/illuminated indication element 130 is directly linked to a physical parameter of the robot arm 200, and thus does not carry any additional information. In the embodiment of Fig. 4, different illumination states of the indication elements 130 are schematically indicated. For example, the dashed halos encircling the indication elements 130 may represent green light, which in this embodiment may be indicative of no external pressure applied, the solid halos may represent red light which is indicative of intermediate pressure, and the solid, thick circle surrounding the indication element 130 may represent blue light indicative of high contact pressure. By contrast, according to the present invention, a plurality of interaction elements 110 are activated by the control unit 115 such as to indicate information including a graphical user interface, or including an intended movement and/or speed of the robot or of a mechanical part thereof.

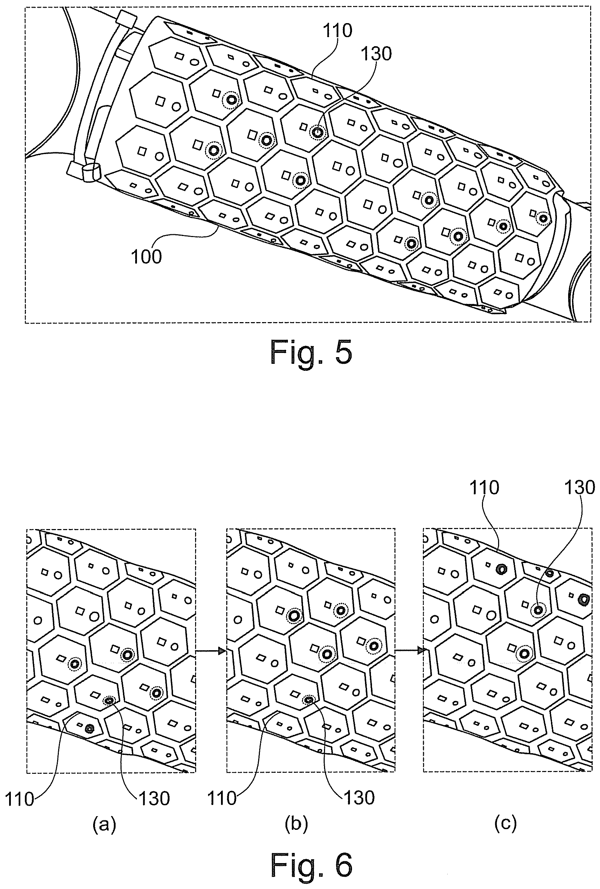

Thus, the control unit 115 is adapted to activate a plurality of indication elements 130 to indicate information. For example, the control unit 115 may be adapted to activate a plurality of indication elements 130 to conjunctly indicate the respective information. This corresponds to Fig. 5 showing an example of an arrangement 100. Here, the control unit 115 is adapted to activate a plurality of indication elements 130 such as to indicate a two dimensional pattern or image on the surface of the user interface. Again, activation of any given indication element 130 is represented by a solid, thick circle surrounding the same. Herein, the activation can again amount to an illumination, typically with different colors, which are not individually represented in figure 5. In this example, each of the plurality of indication elements 130 corresponds to a single pixel of a two dimensional pattern or image. In this way, the control unit 115 can conjunctly use a plurality of pixel elements to provide a two dimensional pattern or image on the surface of the user interface, if the constellation of indication elements 130 allows such a pattern or image to be formed. For example, the indication elements 130 of a part of a robot arm may be selected by the control unit 115 so as to indicate that this part of the robot arm 200 can be touched, pushed or pulled to control or guide the robot arm, for example to instruct or to assist the robot in a learning phase. Alternatively, the indication elements 130 may be selected and activated by the control unit such as to indicate which part of the robot arm may be subject to excessive force or pressure, and/or to indicate GUI control fields allowing user interaction. For this purpose, the color and/or intensity of, for example, illuminated indication elements 130 can be adjusted or changed to convey or emphasize information to a user, for example in the case of debility of sight or color blindness of the user.
In order to form such patterns or images on the surface of the user interface, it may be necessary to determine the position of each of the indication elements 130 such as to determine which of the indication elements 130 should be selected to correspond to a respective pixel of patterns or images. For example, the indication elements 130 can be selected such as to position and rotate a two dimensional image on a robot's surface, wherein the positioning and rotation preferably compensate a movement or rotation of the robot or of a part thereof. For this purpose, the control unit 115 can be adapted to determine the current position and orientation of at least one mechanical part of the robot based on detected physical parameters, and to use this information for the allocation of indication elements 130 to respective pixels of patterns or images. Alternatively, a self-organizing mapping of physical parameters of the apparatus can be used to determine positions of the indication elements 130, for example based on a kinematic model as described in "Self-Organizing Sensory-Motor Map for Low-Level Touch Reactions", Philipp Mittendorfer et.al., 11th IEEE-RAS International Conference on Humanoid Robots, 2011, pp. 59-66.

For example, the respective image or two dimensional pattern may indicate a past, a current or an intended direction of movement or speed of an apparatus, or of a mechanical part thereof. For this purpose, the control unit 115 can be adapted to determine a past, a current or an intended direction of movement and/or speed of said apparatus, or of said mechanical part thereof, based on detected physical parameters, in particular, based on the physical parameters determined by the detection elements 120. In this way, a user may be alerted about an intended movement of the apparatus, in particular if the movement represents a danger for the user collaborating with the apparatus.

Depending on the size of the indication elements 130 and the density of the arrangement of the indication elements 130, the indication elements 130 may be selected and activated by the control unit such as to display graphical images or photos on the surface of the user interface.

For example, each of the two dimensional images or patterns may represent a frame of an animation or a movie clip. In other words, a sequence of images or patterns can be indicated on the surface of the user interface such as to provide an animation or a movie clip. Fig. 6 illustrates three sequential frames (a), (b) and (c) of such an animation, wherein a pattern or an image indicated by the indication elements 130 is sequentially shifted upwardly, for example to indicate a direction of rotation or movement, or to draw the user's attention to an upper part of the apparatus. In this respect, for example the timing, direction, speed, intensity, symbol and/or color of the pattern or the image can be selected or adjusted by the control unit 115 according to the underlying information being conveyed to the user. For example, the speed and the directional movement of a symbol comprised by the animation may reflect the speed and direction of an intended movement of a part of the apparatus holding the respective indication elements 130.

Alternatively, the images, the two dimensional patterns, or the respective animation may be indicated on the surface of the apparatus such as to enable a communication channel to other apparatuses. In this way, other apparatuses can, for example, visually determine the identity of the apparatus by detecting a corresponding symbol or mark formed as an corresponding image or two dimensional pattern projected on the two and/or three dimensional surface of the apparatus. This may be particularly useful if a plurality of apparatuses using different communication techniques or protocols collaborate in industrial processing, for example machines originating from different vendors, and are required to communicate their identity to surrounding apparatuses, and/or for example their position, operational intentions or movements for improved machine collaboration.

For example, the control unit 115 may be adapted to select a plurality of indication elements 130 based on the current position and orientation of at least one mechanical part of the apparatus 200, or based on the current position and orientation of at least one of the interaction elements 110, see also above discussion on the "Self-Organizing Sensory-Motor Map for Low-Level Touch Reactions". For example, the control unit 115 may select a group of indication elements 130 which is facing the user, such as to enhance the comfort of viewing the information provided by the selected indication elements 130, and to improve the user's safety when interacting with the interaction elements 110 corresponding to the selected indication elements 130. For this purpose, the control unit 115 is required to be aware of position of the user, at least relatively to the apparatus or robot 200. In an example, additional sensors may be used to locate the user in the vicinity of the apparatus 200, for example camera based sensors. In another example, a zone surrounding or close to an object being processed in the collaboration between the user and the machine is used by the control unit 115 to define the location where the presence of the user should be expected. In either case, the user desiring to interact with the user interface is not required to position himself relative to the interface, because the control unit 115 has already selected a group of indication elements 130 for indicating the user interface facing the user, or at least appearing on a surface of the apparatus close to the user. It follows that the user is not required to distance himself from an object being processed.

In other words, by having the control unit 115 activate a plurality of indication elements 130, wherein the plurality of indication elements 130 has been selected by the control unit 115 based on the position and orientation of at least one mechanical part of the apparatus 200, or based on the position and orientation of the interactive elements 110, the user interface can be suitably arranged on the surface of the apparatus, preferably in line of sight of the user, and further preferred within the field of vision of the user. It follows that the comfort of the user-machine interaction, and the safety of the direct physical collaboration of a human and a machine, can be significantly improved. This holds in particular when the control unit 115 is adapted to select said plurality of indication elements continuously during a movement of a mechanical part of the apparatus in a dynamic manner. In this way, the user interface can be dynamically adjusted on the surface of the apparatus, preferably to continuously move and/or rotate the interface on and along the surface of the apparatus, to continuously face or at least remain close to the user, for example to be in line of sight of the user, or to follow the field of vision of the user, as the apparatus or a part therof is moving.

The embodiments described above and the accompanying figures merely serve to illustrate the method and devices according to the present invention, and should not be taken to indicate any limitation thereof. The scope of the patent is solely determined by the following claims.

### LIST OF REFERENCE SIGNS

- 100,: an arrangement for providing a user interface of an apparatus
- 110,: interaction elements
- 115: control unit
- 120,: detection elements
- 130,: indication elements
- 200,: machine, machine part, apparatus, robot, or robot arm.

## Claims

1. An arrangement (100) for providing a user interface of an apparatus (200), the apparatus (200) being a production machine or machine part in an industrial environment or a robot, comprising:
a first plurality of interaction elements (110) arranged on a surface of the apparatus (200), wherein each of the interaction elements (110) comprises at least one detection element (120) for detecting at least one physical parameter related to the apparatus (200) or to a user input, and at least one indication element (130) for indicating information, wherein each of the indication elements (130) comprises a display element and/or an actuator element for providing a tactile feedback to a user touching the respective interaction element (110); the arrangement (100) further comprising
a control unit (115) coupled to the first plurality of interaction elements (110) and adapted to activate indication elements (130) of a second plurality of interaction elements (110), among the first plurality of interaction elements (110), such as to indicate information;
**characterised in that**
said information comprises an intended movement and/or speed of the apparatus (200) or of a mechanical part thereof.

2. The arrangement (100) according to claim 1, wherein each of the detection elements (120) comprises a capacitive sensor, a force sensor, a pressure sensor, a position sensor, a humidity sensor, a temperature sensor, a reflectivity sensor, an acceleration sensor, a rotation sensor, and/or multi-modal sensors.

3. The arrangement (100) according to claim 1 or 2, wherein said display element is a light-emitting element or a liquid crystal display element.

4. The arrangement (100) according to any of the preceding claims, wherein the interaction elements (110) of the first plurality of interaction elements (110) are adjacently arranged such as to form an array or a mesh structure, wherein the array or the mesh structure at least partly covers the surface of the apparatus (200), preferably by more than 30%, and more preferably by more than 50%.

5. The arrangement (100) according to any of the preceding claims, wherein the control unit (115) is adapted to activate said indication elements (130) of the second plurality of interaction elements (110), such as to conjunctly indicate said information.

6. The arrangement (100) according to claim 5, wherein each of said indication elements (130) of the second plurality of interaction elements (110) comprises said display element and wherein the indicated information represents an image and/or a two-dimensional pattern.

7. The arrangement (100) according to claim 6, wherein the image and/or the two-dimensional pattern represents a frame of an animation and/or a movie clip.

8. The arrangement (100) according to claim 6 or 7, wherein the image or the two-dimensional pattern indicates the past, the current and/or the intended direction of movement and/or speed of the apparatus (200) or of a mechanical part thereof.

9. The arrangement (100) according to any of claims 6 to 8, wherein the image and/or the two-dimensional pattern comprises a graphical user interface, preferably a graphical user interface menu or a graphical user interface form comprising selectable and/or adjustable control elements.

10. The arrangement (100) according to any of the preceding claims, wherein the control unit (115) is adapted to determine the past, the current and/or the intended direction of movement and/or speed of said apparatus (200) or of a mechanical part thereof based on the detected at least one physical parameter of the apparatus (200), or to determine the current position and orientation of at least one mechanical part of the apparatus (200) based on the detected at least one physical parameter of the apparatus (200).

11. The arrangement (100) according to claim 10, wherein the control unit (115) is adapted to select and activate said indication elements (130) of the second plurality of interaction elements (110) based at least in part on the position and orientation of at least one mechanical part of the apparatus (200).

12. The arrangement (100) according to claim 11, wherein the control unit (115) is adapted to dynamically select and activate said indication elements (130) of the second plurality of interaction elements (110) based on the current position and orientation of at least one mechanical part of the apparatus (200) continuously determined during a movement of the at least one mechanical part of the apparatus (200).

13. The arrangement (100) according to any of the preceding claims, wherein the control unit (115) is adapted to activate said indication elements (130) of the second plurality of interaction elements (110) to indicate information depending on the context of a user interaction with the apparatus (200), in particular depending on the current state of apparatus operation and/or depending on a user input detected by the detection elements (120).

14. The arrangement (100) according to claim 13, wherein the control unit (115) is adapted to determine whether a user input detected by the detection elements (120) indicates that a movement of the apparatus (200) should be halted, that a movement of the apparatus (200) should be guided by the user input, or that the behavior of the apparatus (200) should be programmed by the user input, in particular wherein the determination includes detecting user inputs at different detection elements (120) over a period of time.

15. The arrangement (100) according to any of the preceding claims, wherein at least one of the detection elements (120) is adapted to detect a user input provided by a user touching or otherwise influencing the surface of the apparatus (200), in particular wherein the apparatus (200) is a robot configured to be operated by the user in a collaborative robotic environment wherein the user is present in the operational range of the robot.

## Patentansprüche

1. Anordnung (100) zum Bereitstellen einer Nutzerschnittstelle einer Vorrichtung (200), wobei die Vorrichtung (200) eine Produktionsmaschine oder ein Maschinenteil in einer industriellen Umgebung oder ein Roboter ist, umfassend:
eine erste Mehrzahl von Interaktionselementen (110), die auf einer Oberfläche der Vorrichtung (200) angeordnet sind, wobei ein jedes der Interaktionselemente (110) mindestens ein Detektionselement (120) zum Detektieren mindestens eines physikalischen Parameters umfasst, der sich auf die Vorrichtung (200) oder eine Nutzereingabe bezieht, und mindestens ein Indikationselement (130) zum Anzeigen von Information, wobei ein jedes der Indikationselemente (130) ein Anzeigeelement und/oder ein Aktorelement zum Bereitstellen einer taktilen Rückkopplung an einen Nutzer, der das jeweilige Interaktionselement (110) berührt, umfasst, wobei die Anordnung (100) ferner eine Steuereinheit (115) umfasst, die mit der ersten Mehrzahl von Interaktionselementen (110) gekoppelt ist und dazu geeignet ist, Indikationselemente (130) einer zweiten Mehrzahl von Interaktionselementen (110) aus der ersten Mehrzahl von Interaktionselementen (110) zu aktivieren, um Information anzuzeigen; **dadurch gekennzeichnet, dass** die Information eine beabsichtigte Bewegung und/oder eine Geschwindigkeit der Vorrichtung (200) oder eines mechanischen Teils derselben umfasst.

2. Anordnung (100) nach Anspruch 1, wobei ein jedes der Detektionselemente (120) einen kapazitiven Sensor, einen Kraftsensor, einen Drucksensor, einen Positionssensor, einen Feuchtigkeitssensor, einen Temperatursensor, einen Reflektivitätssensor, einen Beschleunigungssensor, einen Rotationssensor und/oder multimodale Sensoren umfasst.

3. Anordnung (100) nach einem der Ansprüche 1 oder 2, wobei das Anzeigeelement ein Licht-emittierendes Element oder ein Flüssigkristallindikationselement ist.

4. Anordnung (100) nach einem der vorhergehenden Ansprüche, wobei die Interaktionselemente (110) der ersten Mehrzahl von Interaktionselementen (110) aneinander angrenzend angeordnet sind, um ein Array oder eine Netzstruktur zu bilden, wobei das Array oder die Netzstruktur die Oberfläche der Vorrichtung (200) zumindest teilweise bedeckt, vorzugsweise zu mehr als 30%, und besonders vorzugsweise zu mehr als 50%.

5. Anordnung (100) nach einem der vorhergehenden Ansprüche, wobei die Steuereinheit (115) dazu geeignet ist, die Indikationselemente (130) der zweiten Mehrzahl von Interaktionselementen (110) zu aktivieren, um in Kombination die Information anzuzeigen.

6. Anordnung (100) nach Anspruch 5, wobei ein jedes der Indikationselemente (130) der zweiten Mehrzahl von Interaktionselementen (110) das Anzeigeelement umfasst, und wobei die angezeigte Information ein Bild und/oder ein zweidimensionales Muster repräsentiert.

7. Anordnung (100) nach Anspruch 6, wobei das Bild und/oder das zweidimensionale Muster einen Rahmen (frame) einer Animation und/oder eines Filmclips repräsentiert.

8. Anordnung (100) nach Anspruch 6 oder 7, wobei das Bild oder das zweidimensionale Muster eine vergangene, die aktuelle und/oder eine beabsichtigte Bewegungsrichtung und/oder Geschwindigkeit der Vorrichtung (200) oder eines mechanischen Teils derselben anzeigt.

9. Anordnung (100) nach einem der Ansprüche 6 bis 8, wobei das Bild und/oder das zweidimensionale Muster eine graphische Nutzerschnittstelle umfasst, vorzugsweise ein graphisches Nutzerschnittstellenmenü oder ein graphisches Nutzerschnittstellenformular, welches auswählbare und/oder einstellbare Steuerelemente umfasst.

10. Anordnung (100) nach einem der vorhergehenden Ansprüche, wobei die Steuereinheit (115) dazu geeignet ist, eine vergangene, eine aktuelle und/oder eine beabsichtigte Bewegungsrichtung und/oder Geschwindigkeit der Vorrichtung (200) oder eines mechanischen Teils derselben basierend auf dem detektierten mindestens einen physikalischen Parameter der Vorrichtung (200) zu ermitteln, oder die aktuelle Position und Orientierung mindestens eines mechanischen Teils der Vorrichtung (200) basierend auf dem mindestens einen detektierten physikalischen Parameter der Vorrichtung (200) zu ermitteln.

11. Anordnung (100) nach Anspruch 10, wobei die Steuereinheit (115) dazu geeignet ist, die Indikationselemente (130) der zweiten Mehrzahl von Interaktionselementen (110) auszuwählen und zu aktivieren, basierend zumindest teilweise auf der Position und der Orientierung mindestens eines mechanischen Teils der Vorrichtung (200).

12. Anordnung (100) nach Anspruch 11, wobei die Steuereinheit (115) dazu geeignet ist, Indikationselemente (130) aus der zweiten Mehrzahl von Interaktionselementen (110) auszuwählen und zu aktivieren, basierend auf der aktuellen Position und Orientierung mindestens einen mechanischen Teils der Vorrichtung (200), die kontinuierlich während einer Bewegung des mindestens einen mechanischen Teils der Vorrichtung (200) ermittelt werden.

13. Anordnung (100) nach einem der vorhergehenden Ansprüche, wobei die Steuereinheit (115) geeignet ist, die Indikationselemente (130) der zweiten Mehrzahl von Interaktionselementen (110) zu aktivieren, um Information basierend auf dem Kontext einer Nutzerinteraktion mit der Vorrichtung (200) anzuzeigen, insbesondere in Abhängigkeit von dem aktuellen Zustand des Betriebs der Vorrichtung und/oder abhängig von einer Nutzereingabe, die durch die Detektionselemente (120) detektiert werden.

14. Anordnung (100) nach Anspruch 13, wobei die Steuereinheit (115) dazu geeignet ist, zu ermitteln, ob eine durch die Detektionselemente (120) detektierte Nutzereingabe anzeigt, dass eine Bewegung der Vorrichtung (200) angehalten werden soll, dass eine Bewegung der Vorrichtung (200) durch Nutzereingabe geführt werden soll, oder dass das Verhalten der Vorrichtung (200) durch Nutzereingabe programmiert werden soll, wobei dieses Ermitteln es insbesondere umfasst, Nutzereingaben an unterschiedlichen Detektionselementen (120) über eine Zeitspanne hinweg zu detektieren.

15. Anordnung (100) nach einem der vorhergehenden Ansprüchen, wobei mindestens eines der Detektionselemente (120) dazu geeignet ist, eine Nutzereingabe, zu detektieren, die dadurch bewirkt wird, dass ein Nutzer die Oberfläche der Vorrichtung (200) berührt oder in anderer Weise beeinflusst, wobei die Vorrichtung (200) insbesondere ein Roboter ist, der dazu konfiguriert ist, durch den Nutzer in einer kollaborativen robotischen Umgebung betätigt zu werden, wobei der Nutzer sich in dem Betriebsbereich des Roboters befindet.

## Revendications

1. Agencement (100) destiné à fournir une interface utilisateur d'un appareil (200), l'appareil (200) étant une pièce de machine ou une machine de production dans un environnement industriel ou un robot, comprenant :
une première pluralité d'éléments d'interaction (110) agencés sur une surface de l'appareil (200), dans lequel chacun des éléments d'interaction (110) comprend au moins un élément de détection (120) destiné à détecter au moins un paramètre physique connexe à l'appareil (200) ou à une entrée d'utilisateur, et au moins un élément d'indication (130) destiné à indiquer des informations, dans lequel chacun des éléments d'indication (130) comprend un élément d'affichage et/ou un élément d'actionnement en vue de fournir une rétroaction tactile à un utilisateur effleurant l'élément d'interaction (110) respectif ; l'agencement (100) comprenant en outre :
une unité de commande (115) couplée à la première pluralité d'éléments d'interaction (110) et apte à activer des éléments d'indication (130) d'une seconde pluralité d'éléments d'interaction (110), parmi la première pluralité d'éléments d'interaction (110), de manière à indiquer des informations ;
**caractérisé en ce que**
lesdites informations comprennent un mouvement prévu et/ou une vitesse prévue de l'appareil (200) ou d'une pièce mécanique de celui-ci.

2. Agencement (100) selon la revendication 1, dans lequel chacun des éléments de détection (120) comprend un capteur capacitif, un capteur de force, un capteur de pression, un capteur de position, un capteur d'humidité, un capteur de température, un capteur de réflectivité, un capteur d'accélération, un capteur de rotation et/ou des capteurs multimodes.

3. Agencement (100) selon la revendication 1 ou 2, dans lequel ledit élément d'affichage est un élément émetteur de lumière ou un élément d'affichage à cristaux liquides.

4. Agencement (100) selon l'une quelconque des revendications précédentes, dans lequel les éléments d'interaction (110) de la première pluralité d'éléments d'interaction (110) sont agencés de façon adjacente de manière à former un réseau ou une structure maillée, dans lequel le réseau ou la structure maillée recouvre au moins partiellement la surface de l'appareil (200), de préférence de plus de 30 %, ou mieux de plus de 50 %.

5. Agencement (100) selon l'une quelconque des revendications précédentes, dans lequel l'unité de commande (115) est apte à activer lesdits éléments d'indication (130) de la seconde pluralité d'éléments d'interaction (110), de manière à indiquer conjointement lesdites informations.

6. Agencement (100) selon la revendication 5, dans lequel chacun desdits éléments d'indication (130) de la seconde pluralité d'éléments d'interaction (110) comprend ledit élément d'affichage, et dans lequel les informations indiquées représentent une image et/ou un motif bidimensionnel.

7. Agencement (100) selon la revendication 6, dans lequel l'image et/ou le motif bidimensionnel représentent une trame d'une animation et/ou un clip vidéo.

8. Agencement (100) selon la revendication 6 ou 7, dans lequel l'image ou le motif bidimensionnel indique la vitesse et/ou la direction de déplacement antérieures, la vitesse et/ou la direction de déplacement en cours et/ou la vitesse et/ou la direction de déplacement prévues de l'appareil (200) ou d'une pièce mécanique de celui-ci.

9. Agencement (100) selon l'une quelconque des revendications 6 à 8, dans lequel l'image et/ou le motif bidimensionnel comprennent une interface graphique utilisateur, de préférence un menu d'interface graphique utilisateur ou une forme d'interface graphique utilisateur comprenant des éléments de commande sélectionnables et/ou ajustables.

10. Agencement (100) selon l'une quelconque des revendications précédentes, dans lequel l'unité de commande (115) est apte à déterminer la vitesse et/ou la direction de déplacement antérieures, la vitesse et/ou la direction de déplacement en cours et/ou la vitesse et/ou la direction de déplacement prévues dudit appareil (200) ou d'une pièce mécanique de celui-ci, sur la base dudit au moins un paramètre physique détecté de l'appareil (200), ou à déterminer la position et l'orientation en cours d'au moins une pièce mécanique de l'appareil (200), sur la base dudit au moins un paramètre physique détecté de l'appareil (200).

11. Agencement (100) selon la revendication 10, dans lequel l'unité de commande (115) est apte à sélectionner et à activer lesdits éléments d'indication (130) de la seconde pluralité d'éléments d'interaction (110), sur la base, au moins en partie, de la position et de l'orientation d'au moins une pièce mécanique de l'appareil (200).

12. Agencement (100) selon la revendication 11, dans lequel l'unité de commande (115) est apte à sélectionner et à activer dynamiquement lesdits éléments d'indication (130) de la seconde pluralité d'éléments d'interaction (110) sur la base de la position et de l'orientation en cours d'au moins une pièce mécanique de l'appareil (200) déterminée continuellement au cours d'un mouvement de ladite au moins une pièce mécanique de l'appareil (200).

13. Agencement (100) selon l'une quelconque des revendications précédentes, dans lequel l'unité de commande (115) est apte à activer lesdits éléments d'indication (130) de la seconde pluralité d'éléments d'interaction (110) en vue d'indiquer des informations en fonction du contexte d'une interaction d'utilisateur avec l'appareil (200), en particulier en fonction de l'état en cours du fonctionnement de l'appareil et/ou en fonction d'une entrée d'utilisateur détectée par les éléments de détection (120).

14. Agencement (100) selon la revendication 13, dans lequel l'unité de commande (115) est apte à déterminer si une entrée d'utilisateur détectée par les éléments de détection (120) indique qu'un mouvement de l'appareil (200) doit être interrompu, qu'un mouvement de l'appareil (200) doit être guidé par l'entrée d'utilisateur, ou que le comportement de l'appareil (200) doit être programmé par l'entrée d'utilisateur, en particulier dans lequel l'étape de détermination inclut l'étape consistant à détecter des entrées d'utilisateur sur différents éléments de détection (120) au cours d'une période de temps.

15. Agencement (100) selon l'une quelconque des revendications précédentes, dans lequel au moins l'un des éléments de détection (120) est apte à détecter une entrée d'utilisateur fournie par un utilisateur effleurant ou autrement influençant la surface de l'appareil (200), en particulier dans lequel l'appareil (200) est un robot configuré de manière à être exploité par l'utilisateur dans un environnement robotique collaboratif dans lequel l'utilisateur est présent dans la zone opérationnelle du robot.
